(19) **Europäisches Patentamt European Patent Office Office européen des brevets**

(11) **EP 4 458 865 A1**

(12) **EUROPEAN PATENT APPLICATION**
published in accordance with Art. 153(4) EPC

(43) Date of publication:
06.11.2024 Bulletin 2024/45

(21) Application number: 22916035.3

(22) Date of filing: 26.12.2022

(51) International Patent Classification (IPC):
*C08F 2/18* (2006.01)    *B01J 13/14* (2006.01)

(52) Cooperative Patent Classification (CPC):
**B01J 13/14; C08F 2/18**

(86) International application number:
**PCT/JP2022/047959**

(87) International publication number:
**WO 2023/127812 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021214630**

(71) Applicant: **Zeon Corporation
Chiyoda-ku
Tokyo 100-8246 (JP)**

(72) Inventor: **TSUMURA, Ryo
Tokyo 100-8246 (JP)**

(74) Representative: **Kraus & Lederer PartGmbB
Thomas-Wimmer-Ring 15
80539 München (DE)**

(54) **HOLLOW PARTICLE**

(57)    Provided are hollow particles each comprising a shell containing a resin and a hollow portion surrounded by the shell, wherein the resin is constituted by a shell polymer containing a cross-linkable monomer unit, the hollow particles have a true density of 1.18 g/cm$^3$ or less, and C of the hollow particles calculated from Expression (1) below has a value of 1.16 or less:

$$C = A \times (100 - B)/100 \qquad \text{Expression (1)}$$

where A represents the value (unit: g/cm$^3$) of the true density of the hollow particles, and B represents the value (unit: mass%) of the proportion of a monofunctional monomer unit contained in the shell polymer.

EP 4 458 865 A1

**Description**

TECHNICAL FIELD

The present invention relates to hollow particles, and more specifically relates to hollow particles having a high void ratio and excellent electrical insulation.

BACKGROUND ART

Hollow particles such as those produced by polymerization of a polymerizable monomer are particles having hollow portions inside the particles, and are used as additives added to molding resins for a variety of purposes such as weight reduction. From the viewpoint of weight reduction, a high void ratio is required for such hollow particles.
As one of techniques related to such hollow particles, for example, Patent Document 1 discloses hollow resin particles for a thermosensitive recording material used for an intermediate layer of a thermosensitive recording material comprising a support, the intermediate layer, and a thermosensitive coloring layer sequentially laminated, the thermosensitive coloring layer containing a leuco dye and a color developer as the main components, wherein repeating units constituting resin portions contain 10 to 60 mass% of an acid group-containing polymerizable monomer unit and 5 to 65 mass% of a cross-linkable monomer unit, and the number-based proportion of particles having a void ratio of 70 to 90%, a number average particle size of 0.8 to 3.5 $\mu$m, and a particle diameter of 10 $\mu$m or more is less than 1.0%.

RELATED ART DOCUMENTS

PATENT DOCUMENTS

Patent Document 1: WO 2020/045498

SUMMARY OF INVENTION

PROBLEM TO BE SOLVED BY THE INVENTION

The present inventor has examined about use of hollow particles as an additive to be added to a resin for molding low dielectric bodies used in the electrical and electronic fields. In such applications, excellent electrical insulation (low relative permittivity, low dielectric loss tangent) is required. However, examination on the electrical insulation is not found in Patent Document 1. The present inventor, who has conducted research, has found that the electrical insulation of the hollow particles is susceptible to improvement.
An object of the present invention is to provide hollow particles having a high void ratio and excellent electrical insulation.

MEANS FOR SOLVING PROBLEMS

The present inventor, who has conducted research to achieve the above object, has found that the above object can be achieved by hollow particles each comprising a shell formed of a shell polymer containing a cross-linkable monomer unit and a hollow portion, wherein the hollow particles have a true density of 1.18 g/cm$^3$ or less, and C calculated from a specific expression (1) has a value of 1.16 or less, and has completed the present invention.
Specifically, the present invention provides hollow particles each comprising a shell containing a resin and a hollow portion surrounded by the shell,

wherein the resin is constituted by a shell polymer containing a cross-linkable monomer unit,
the hollow particles have a true density of 1.18 g/cm$^3$ or less, and
C of the hollow particles calculated from Expression (1) below has a value of 1.16 or less:

$$C = A \times (100 - B)/100 \qquad \text{Expression (1)}$$

where A represents the value (unit: g/cm$^3$) of the true density of the hollow particles, and B represents the value (unit: mass%) of the proportion of a monofunctional monomer unit contained in the shell polymer.

Preferably, in the hollow particles according to the present invention, the shell polymer contains 90 mass% or less of a heteroatom-containing monomer unit.

Preferably, the hollow particles according to the present invention are obtained through solvent removal in liquid.

Preferably, the hollow particles according to the present invention have a void ratio of 60% or more.

In the hollow particles according to the present invention, preferably, the shell polymer further contains the monofunctional monomer unit, and more preferably, contains a monofunctional hydrocarbon monomer unit as the monofunctional monomer unit.

EFFECTS OF INVENTION

Hollow particles having a high void ratio and excellent electrical insulation can be provided.

DESCRIPTION OF EMBODIMENTS

<Hollow particles>

The hollow particles according to the present invention are hollow particles each comprising a shell containing a resin and a hollow portion surrounded by the shell, wherein the resin is constituted by a shell polymer containing a cross-linkable monomer unit, the hollow particles have a true density of 1.18 g/cm$^3$ or less, and C of the hollow particles calculated from Expression (1) described later has a value of 1.16 or less.

The shell included in the hollow particles according to the present invention contains a resin constituted by a shell polymer.

The shell polymer is a polymer used to form a shell of the hollow particles, and contains a cross-linkable monomer unit. The cross-linkable monomer forming a cross-linkable monomer unit is a monomer which has two or more polymerizable functional groups, and forms a cross-linking bond in the resin by a polymerization reaction. As the cross-linkable monomer, a compound having at least one ethylenically unsaturated bond as a polymerizable functional group is generally used.

Examples of the cross-linkable monomer forming a cross-linkable monomer unit include cross-linkable hydrocarbon monomers and heteroatom-containing cross-linkable monomers.

Examples of the cross-linkable hydrocarbon monomers include, but not particularly limited to, divinylbenzene, divinyldiphenyl, divinylnaphthalene, and the like. Among these, divinylbenzene is preferred.

Examples of the heteroatom-containing cross-linkable monomers include, but not particularly limited to, bifunctional heteroatom-containing cross-linkable monomers such as diallyl phthalate, allyl (meth)acrylate [indicating allyl acrylate and/or allyl methacrylate. Hereinafter, the same is applied.], ethylene glycol di(meth)acrylate, and pentaerythritol di(meth)acrylate; tri- or higher functional heteroatom-containing cross-linkable monomers such as trimethylolpropane tri(meth)acrylate, ditrimethylolpropane tetra(meth)acrylate, pentaerythritol tri(meth)acrylate, pentaerythritol tetra(meth)acrylate, ethoxified pentaerythritol tetra(meth)acrylate, dipentaerythritol hexa(meth)acrylate, and dipentaerythritol poly(meth)acrylate; and the like. Among these, ethylene glycol di(meth)acrylate, pentaerythritol tetra(meth)acrylate, dipentaerythritol poly (meth)acrylate, and pentaerythritol tri(meth)acrylate are preferred, ethylene glycol di(meth)acrylate and pentaerythritol tetra(meth)acrylate are more preferred, and ethylene glycol dimethacrylate and pentaerythritol tetraacrylate are still more preferred.

Cross-linkable monomers are preferably cross-linkable hydrocarbon monomers, ethylene glycol di(meth)acrylate, and pentaerythritol tetra(meth)acrylate, and are more preferably divinylbenzene, ethylene glycol dimethacrylate, and pentaerythritol tetraacrylate.

These cross-linkable monomers can be used alone or in combination. For example, a cross-linkable hydrocarbon monomer can be used in combination with a heteroatom-containing cross-linkable monomer. As the heteroatom-containing cross-linkable monomer, two or more heteroatom-containing cross-linkable monomers can be used in combination. For example, a bifunctional heteroatom-containing cross-linkable monomer can be used in combination with a tri- or higher functional heteroatom-containing cross-linkable monomer.

The shell polymer may be composed of substantially only a cross-linkable monomer unit, or may contain a monofunctional monomer unit in addition to the cross-linkable monomer unit.

The monofunctional monomer forming a monofunctional monomer unit is a monomer having only one polymerizable functional group. A compound having an ethylenically unsaturated bond as the polymerizable functional group is generally used. Examples of the monofunctional monomer forming a monofunctional monomer unit include monofunctional hydrocarbon monomers and heteroatom-containing monofunctional monomers. The shell polymer preferably contains a monofunctional monomer unit in addition to the cross-linkable monomer unit, and more preferably contains at least a monofunctional hydrocarbon monomer unit as the monofunctional monomer unit.

Examples of the monofunctional hydrocarbon monomer include, but not particularly limited to, aromatic vinyl monomers such as styrene, ethylvinylbenzene, vinyltoluene, α-methylstyrene, p-methylstyrene, and halogenated styrene; monoolefin monomers such as ethylene, propylene, butylene, and 4-methyl-1-pentene; diene monomers such as butadiene and isoprene; and the like. Among these, styrene and ethylvinylbenzene are preferred.

Examples of the heteroatom-containing monofunctional monomers include, but not particularly limited to, hydrophilic monofunctional monomers; acrylic monovinyl monomers such as methyl (meth)acrylate, ethyl (meth)acrylate, butyl (meth)acrylate, 2-ethylhexyl (meth)acrylate, and lauryl (meth)acrylate; vinyl carboxylate ester monomers such as vinyl acetate; vinyl halide monomers such as vinyl chloride; vinylidene halide monomers such as vinylidene chloride; vinylpyridine monomers; and the like.

The hydrophilic monofunctional monomers preferably have a solubility in water of 1 mass% or more. Examples of such hydrophilic monofunctional monomers include, but not particularly limited to, monofunctional monomers having a hydrophilic group, such as acid group-containing monomers, hydroxyl group-containing monomers, amide group-containing monomers, and polyoxyethylene group-containing monomers.

The acid group-containing monomer indicates a monomer containing an acid group. The acid group herein includes both of proton donating groups (Bronsted acid groups) and electron-pair receiving groups (Lewis acid groups) . The acid group-containing monomer is not particularly limited as long as it has an acid group. Examples thereof include carboxyl group-containing monomers, sulfonic acid group-containing monomers, and the like. Examples of the carboxyl group-containing monomers include monomers of ethylenically unsaturated carboxylic acids such as acrylic acid, methacrylic acid, crotonic acid, cinnamic acid, itaconic acid, fumaric acid, maleic acid, and butene tricarboxylic acid; monoalkyl esters of unsaturated dicarboxylic acids such as monoethyl itaconate, monobutyl fumarate, and monobutyl maleate; and the like. Examples of the sulfonic acid group-containing monomers include styrenesulfonic acid and the like.

Examples of the hydroxyl group-containing monomers include 2-hydroxyethyl (meth)acrylate, 2-hydroxypropyl (meth)acrylate, 4-hydroxybutyl (meth)acrylate, and the like.

Examples of the amide group-containing monomers include acrylamide, dimethylacrylamide, and the like.

Examples of the polyoxyethylene group-containing monomers include methoxypolyethylene glycol (meth)acrylate and the like.

These monofunctional monomer units can be used alone or in combination.

The proportion of the cross-linkable monomer unit contained in the shell polymer is not particularly limited. From the viewpoint of mechanical strength of the hollow particles, the proportion thereof is preferably 60 mass% or more, more preferably 70 mass% or more, still more preferably 75 mass% or more, still more preferably 80 mass% or more, further still more preferably 85 mass% or more, particularly preferably 90 mass% or more, most preferably 95 mass% or more. When the proportion of the cross-linkable monomer contained falls within these ranges above, a covalent bond network is densely formed in the shell, and generation of communications holes in the shell and shell defects can also be suppressed. As a result, the hollow particles can have excellent mechanical strength.

On the other hand, from the viewpoint of a tendency that hollow particles have a small particle size distribution (Dv/Dn) when the hollow particles have a relatively large volume average particle size (Dv), the proportion of the cross-linkable monomer unit contained in the shell polymer is not particularly limited, and is preferably 99.2 mass% or less, more preferably 98 mass% or less, still more preferably 95 mass% or less, particularly preferably 92.5 mass% or less, most preferably 90 mass% or less.

From the viewpoint of the mechanical strength of the hollow particles, the proportion of the monofunctional monomer unit contained in the shell polymer is not particularly limited, and is preferably 0 to 40 mass%, more preferably 0 to 30 mass%, still more preferably 0 to 25 mass%, further still more preferably 0 to 20 mass%, further still more preferably 0 to 15 mass%, particularly preferably 0 to 10 mass%, most preferably 0 to 5 mass%. On the other hand, from the viewpoint of a tendency that hollow particles have a small particle size distribution (Dv/Dn) when the hollow particles have a relatively large volume average particle size (Dv), the proportion of the monofunctional monomer unit contained in the shell polymer is not particularly limited, and is preferably 0.8 mass% or more, more preferably 2 mass% or more, still more preferably 5 mass% or more, particularly preferably 7.5 mass% or more, most preferably 10 mass% or more.

The value (unit: mass%) of the proportion of the cross-linkable monomer unit contained in the shell polymer is represented by (100 - B) in Expression (1) described later, and the value (unit: mass%) of the proportion of the monofunctional monomer unit contained in the shell polymer is represented by B in Expression (1) described later.

The shell polymer may contain a heteroatom-containing monomer unit. Examples of the heteroatom-containing monomer forming a heteroatom-containing monomer unit include the above-mentioned heteroatom-containing cross-linkable monomers and heteroatom-containing monofunctional monomers.

The proportion of the heteroatom-containing monomer unit contained in the shell polymer is not particularly limited. To obtain hollow particles having a higher void ratio and more excellent electrical insulation, the proportion thereof is preferably 0 to 95 mass%, more preferably 0 to 90 mass%, still more preferably 0 to 85 mass%, further still more preferably 0 to 80 mass%, further still more preferably 0 to 70 mass%, particularly preferably 0 to 60 mass%, most preferably 0 to 50 mass%.

When significantly excellent electrical insulation is required, the proportion of the heteroatom-containing monomer unit therein is preferably 0 to 50 mass%, more preferably 0 to 40 mass%, still more preferably 0 to 30 mass%, further still more preferably 0 to 20 mass%, further still more preferably 0 to 10 mass%, particularly preferably 0 to 5 mass%, most preferably 0 to 2 mass%.

Furthermore, the proportion of the carboxyl group-containing monomer unit contained in the shell polymer is preferably 4 mass% or less, more preferably 3 mass% or less, particularly preferably 1 mass% or less. The lower limit is 0 mass% or more. When the proportion of the carboxyl group-containing monomer unit contained in the shell polymer falls within these ranges above, the hollow particles can have further enhanced electrical insulation.

On the other hand, when compatibility between a small particle size distribution (Dv/Dn) of the hollow particles and a higher void ratio thereof is required, the proportion of the heteroatom-containing monomer units therein may be 1 mass% or more, may be 2 mass% or more, may be 5 mass% or more, may be 10 mass% or more, may be 20 mass% or more, or may be 30 mass% or more.

The hollow particles according to the present invention are particles each comprising a shell (outer shell) containing the resin and a hollow portion surrounded by the shell. In the present invention, the hollow portion is a hollow space clearly distinguished from the shell of each hollow particle formed of the resin. Although the hollow particles according to the present invention may each have one or two or more hollow portions, to maintain a favorable balance between a high void ratio and mechanical strength, preferably, the hollow particles according to the present invention each have only one hollow portion. In the hollow particles according to the present invention, the proportion of particles having only one hollow portion is preferably 90 mass% or more, more preferably 95 mass% or more.

In the hollow particles according to the present invention, although usually, the shell does not have communication holes and shell defects and the hollow portion is isolated by the shell from the outside of the particle, the shell may have one or two or more communication holes, and the hollow portion may be in communication with the outside of the particle through the communication hole(s). The shell of the hollow particle and a partition defining adjacent hollow portions when the particle has two or more hollow portions may be porous. In this case, the hollow portions have a size large enough to be clearly distinguished from a large number of fine spaces homogeneously dispersed inside the porous structure.

The hollow portions of the hollow particles according to the present invention may be filled with a gas such as air, or may contain a solvent. When the hollow portions of the hollow particles contain a solvent, the solvent may be a residual solvent through a solvent removal step in a method of producing hollow particles described later, and may be, for example, a residual solvent through solvent removal in liquid described later.

The hollow particles according to the present invention can have any shape as long as the hollow portion is formed inside the particles. The hollow particles can have any outer shape, and preferably have a spherical shape due to ease of production.

The outer shape of the hollow particles can be verified by observing the particles with an SEM or a TEM, for example. The inner shape of the hollow particles can be verified by SEM observation of cross-sections of the particles or TEM observation of the particles, for example.

The hollow particles according to the present invention may have an average circularity of 0.950 to 0.995. The hollow particles according to the present invention have high pressure resistance when they contains particles having a circularity of 0.85 or less in a small proportion. The particles having a circularity of 0.85 or less are typically particles having deformation such as depressions or crack, and may be referred to as "odd-shape particles" in the present invention in some cases. Such odd-shape particles have pressure resistance inferior to that of spherical particles because external pressure is likely to be locally applied thereto. Moreover, compared to the spherical particles, the odd-shape particles are more likely to aggregate when those are dispersed in a binder resin, and have inferior dispersibility. When the odd-shape particles are dispersed in a binder resin, aggregates are readily generated, and external pressure is likely to be applied to aggregates, resulting in more inferior pressure resistance. For this reason, the dispersibility and pressure resistance of the hollow particles can be improved by reducing the proportion of the odd-shape particles contained in the hollow particles.

Although the hollow particles according to the present invention may contain, as impurities, a small amount of particles having a low circularity due to crack or deformation of particles, the proportion of the particles having a circularity of 0.85 or less is preferably 10 mass% or less, more preferably 7 mass% or less, still more preferably 5 mass% or less, further still more preferably 4 mass% or less, particularly preferably 3 mass% or less in 100 mass% of the hollow particles according to the present invention.

The circularity is defined as a value obtained by dividing a diameter (circle area-equivalent diameter) of a circle having the same area as that of a projected image of a particle by a diameter of a circle having the same perimeter as that of a projected image of the particle (diameter of the circle of equal perimeter). A particle in a perfect spherical shape has a circularity of 1, and the circularity becomes smaller as the particle has a more complex surface shape.

In the present invention, the circularity is measured using a flow-type particle image analyzer at an image resolution of 0.185 μm/pixel. A flow-type particle image analyzer preferably used can be a trade name "IF-3200" available from JASCO INTERNATIONAL CO., LTD., for example. A sample to be measured is prepared, for example, by adding 0.10 to 0.12 g of hollow particles to an aqueous solution (concentration: 0.3%) of linear sodium alkylbenzenesulfonate to prepare a mixed solution, and dispersing the mixed solution with an ultrasonic washing machine for 5 minutes. The average circularity is the average of the circularities of 1000 to 3000 particles arbitrarily selected.

The hollow particles according to the present invention have a true density of 1.18 g/cm$^3$ or less, and C calculated from Expression (1) described later has a value of 1.16 or less.

It has been found in the present invention that when the true density and the value of C fall within the ranges above, the hollow particles can have a high void ratio and excellent electrical insulation, and the present invention has been completed. In particular, according to the present invention, the hollow particles can have a high void ratio and excellent electrical insulation even when the hollow particles are obtained through solvent removal in liquid.

In this specification, the true density of the hollow particles indicates the density of only the shell portions in the hollow particles. Specifically, the true density of the hollow particles is measured by the following method. After the hollow particles are preliminarily ground, about 10 g of ground pieces of the hollow particles is added to a volumetric flask having a volume of 100 cm$^3$, and the mass of the ground pieces added is precisely measured. In the next step, isopropanol is added to a volumetric flask as in the measurement of the apparent density, the mass of isopropanol is precisely measured, and based on Expression (I) below, the true density (g/cm$^3$) of the hollow particles is calculated.

true density (g/cm$^3$) of hollow particles = [mass of ground pieces of hollow particles] ÷ (100 - [mass of isopropanol] ÷ [density of isopropanol at measurement temperature])

The true density of the hollow particles according to the present invention can be 1.18 g/cm$^3$ or less, and is not particularly limited. To obtain hollow particles having a higher void ratio and more excellent electrical insulation, the true density is preferably 1.175 g/cm$^3$ or less, more preferably 1.170 g/cm$^3$ or less, still more preferably 1.165 g/cm$^3$ or less, particularly preferably 1.160 g/cm$^3$ or less. When an extremely high void ratio and extremely excellent electrical insulation are required, the true density of the hollow particles may be 1.150 g/cm$^3$ or less, may be 1.120 g/cm$^3$ or less, or may be 1.100 g/cm$^3$ or less.

On the other hand, from the viewpoint of the mechanical strength of the hollow particles, the true density of the hollow particles is preferably 0.8 g/cm$^3$ or more, more preferably 0.9 g/cm$^3$ or more, still more preferably 0.99 g/cm$^3$ or more, particularly preferably 1.00 g/cm$^3$ or more, most preferably 1.01 g/cm$^3$ or more. When extremely high mechanical strength is required, the true density of the hollow particles may be 1.040 g/cm$^3$ or more, may be 1.070 g/cm$^3$ or more, or may be 1.100 g/cm$^3$ or more.

In the hollow particles according to the present invention, the value of C calculated from Expression (1) below is 1.16 or less.

$$C = A \times (100 - B)/100 \qquad \text{Expression (1)}$$

In Expression (1) above, A represents the value (unit: g/cm$^3$) of the true density of the hollow particles, and B represents the value (unit: mass%) of the proportion of the monofunctional monomer unit contained in the shell polymer.

In the hollow particles according to the present invention, the value of C calculated from Expression (1) is 1.16 or less, and is not particularly limited. To obtain hollow particles having a higher void ratio and more excellent electrical insulation, the value is preferably 1.155 or less. When an extremely high void ratio and extremely excellent electrical insulation are required, the value of C calculated from Expression (1) may be 1.140 or less, may be 1.120 or less, or may be 1.100 or less. On the other hand, from the viewpoint of the mechanical strength of the hollow particles, the value of C calculated from Expression (1) is preferably 0.1 or more, more preferably 0.2 or more, still more preferably 0.5 or more, particularly preferably 0.6 or more, most preferably 0.7 or more.

The true density of the hollow particles and the value of C calculated from Expression (1) can be controlled by controlling the monomer composition of the shell polymer.

The void ratio of the hollow particles according to the present invention can be 60% or more, for example. According to the present invention, the void ratio of the hollow particles can be preferably 40 to 95%, more preferably 50 to 90%, still more preferably 55 to 88%, particularly preferably 60 to 85%, most preferably 65 to 80%. When the void ratio falls within these ranges above, for example, a sufficient effect of adding the hollow particles (such as weight reduction) can be obtained in pressurized molding of a molding resin blended with the hollow particles according to the present invention.

The void ratio of the hollow particles is calculated from the apparent density $D_1$ of the hollow particles and the true density $D_0$ thereof. The apparent density $D_1$ corresponds to the density of the total hollow particles when the hollow portions are regarded as part of the hollow particles. When a component other than the components constituting the shell (such as the shell polymer) is contained in the hollow portions of the hollow particles, it can be considered that the component other than the components constituting the shell is mostly derived from the residual solvent. Thus, the density of the component other than the components constituting the shell is regarded as equal to the true density $D_0$ of the hollow particles, and the void ratio is determined. Specifically, using the mass including the mass of the component other than the components constituting the shell as the mass of the hollow particles, the apparent density $D_1$ is calculated, and then, using the apparent density $D_1$ thus calculated, the void ratio of the hollow particles is calculated.

The apparent density $D_1$ of the hollow particles is measured as follows. Initially, about 30 cm$^3$ of the hollow particles is added to a volumetric flask having a volume of 100 cm$^3$, and the mass of the added hollow particles is precisely measured. Next, isopropanol is added into the volumetric flask containing the hollow particles up to the exact gauge line, carefully to avoid inclusion of air bubbles. The mass of isopropanol added to volumetric flask is precisely measured, and based on Expression (I) below, the apparent density $D_1$ (g/cm$^3$) of the hollow particles is calculated.

apparent density $D_1$ (g/cm$^3$) of hollow particles = [mass of hollow particles] ÷ (100 - [mass of isopropanol] ÷ [density of isopropanol at measurement temperature])

The void ratio (%) of the hollow particles is calculated from the apparent density $D_1$ of the hollow particles and the true density $D_0$ thereof using Expression (III) below

void ratio (%) of hollow particles = 100 - [apparent density $D_1$ of hollow particles] ÷ [true density of hollow particles $D_1$] × 100

Although the hollow particles according to the present invention can have any volume average particle size (Dv), the volume average particle size (Dv) is preferably 1 to 10 $\mu$m, more preferably 1 to 9 $\mu$m, still more preferably 1.5 to 8 $\mu$m, particularly preferably 1.5 to 7 $\mu$m, most preferably 2 to 6 $\mu$m.

Although the hollow particles according to the present invention can have any particle size distribution (Dv/Dn) (volume average particle size (Dv)/number average particle diameter (Dn)), the particle size distribution is preferably 1.02 to 2.00, more preferably 1.04 to 1.60, still more preferably 1.06 to 1.40, further still more preferably 1.06 to 1.30, particularly preferably 1.08 to 1.25, most preferably 1.10 to 1.20. When the particle size distribution (Dv/Dn) of the hollow particles falls within these ranges above, for example, deformation of the hollow particles can be suppressed and a sufficient effect of adding the hollow particles (such as weight reduction) can be obtained in pressurized molding of a molding resin blended with the hollow particles according to the present invention.

The volume average particle size (Dv) and the number average particle diameter (Dn) of the hollow particles can be determined as follows: for example, the particle sizes of the hollow particles are measured by a laser diffraction-type particle size distribution analyzer, the number average and the volume average thereof are calculated, and the obtained values are defined as the number average particle diameter (Dn) and the volume average particle size (Dv) of the particles, respectively. The particle size distribution (Dv/Dn) is the value obtained by dividing the volume average particle size (Dv) by the number average particle diameter (Dn).

The volume average particle size (Dv) and the particle size distribution (Dv/Dn) of the hollow particles can be controlled by controlling the monomer composition of the shell polymer, the type and amount of the dispersion stabilizer used in suspension polymerization of the hollow particles, and the suspension condition, for example.

From the viewpoint of suitable application of solvent removal in liquid described later, the hollow particles according to the present invention preferably have excellent compatibility with the solvent. For example, the proportion of the hollow particles deposited when immersed in toluene for 48 hours is preferably 5 mass% or more. The proportion of the hollow particles deposited when immersed in methyl ethyl ketone for 24 hours is preferably 5 mass% or more. The proportion of the hollow particles deposited when immersed in acetone for 24 hours is preferably 5 mass% or more.

The thermal decomposition starting temperature of the hollow particles according to the present invention is preferably 150 to 400°C, more preferably 200 to 350°C. The hollow particles having a thermal decomposition starting temperature within these ranges have high heat resistance. The thermal decomposition starting temperature of the hollow particles is a temperature at which the weight reduces by 5%. The thermal decomposition starting temperature of the hollow particles can be measured with a TG-DTA apparatus under an air atmosphere at an air flow rate of 230 mL/min and a heating rate of 10°C/min.

Examples of applications of the hollow particles according to the present invention include additives for members used in a variety of fields such as the automobile field, the electrical field, the electronic field, and the construction, aviation, and space fields, such as low dielectric bodies, thermal insulation materials, sound shielding materials, and light reflecting materials, containers for food products, footwears such as sport shoes and sandals, parts for home appliances, bicycle parts, stationery, tools, and the like. Especially, due to their excellent dielectric properties, the hollow particles according to the present disclosure are suitably used as an additive for implementing low transmission loss in the electrical or electronic field. For example, the hollow particles according to the present invention are suitably used as a material for an electronic circuit substrate, and specifically, by adding the hollow particles according to the present invention to the insulating resin layer of an electronic circuit substrate, transmission loss of the electronic circuit substrate can be reduced.

Besides, the hollow particles according to the present invention are suitably used as an additive for semiconductor materials such as interlayer insulating materials, dry film resists, solder resists, bonding wires, bonding sheets, magnet wires, semiconductor sealing materials, epoxy sealing materials, mold underfills, underfills, die bond pastes, buffer coating materials, copper clad laminates, flexible substrates, high frequency device modules, antenna modules, and in-vehicle radars. Among these, the hollow particles according to the present invention are particularly suitable as an additive for semiconductor materials such as interlayer insulating materials, solder resists, bonding sheets, magnet wires, epoxy sealing materials, underfills, buffer coating materials, copper clad laminates, flexible substrates, high frequency device modules, antenna modules, and in-vehicle radars. The bonding sheet indicates a material forming an insulating adhesive layer, which is used to bond a conductor layer to an organic insulating layer when a multilayer printed circuit board is produced.

The hollow particles according to the present invention demonstrate an excellent effect as a weight reducing material, a thermal insulation material, a soundproof material, or a vibration damping material when added to a molded article. Thus, the hollow particles according to the present invention are suitable as an additive for a molded article, and can be used as an additive for a resin molded article, for example. Moreover, the hollow particles according to the present invention can also be added as a filler in fiber-reinforced molded articles formed of a resin and reinforcing fibers.

Since the hollow particles according to the present invention have a high void ratio, are difficult to crush, and have high heat resistance, these hollow particles satisfy thermally insulating properties and buffer properties (cushioning properties) required for an undercoat material, and also satisfy heat resistance matching to applications to thermosensitive paper. The hollow particles according to the present invention are also useful as a plastic pigment having excellent gloss and covering ability, and the like.

Furthermore, because a useful component such as a fragrance, a chemical, a pesticide, or an ink component can be sealed inside the hollow particles according to the present invention by a method such as immersion or depressurized or pressurized immersion, the hollow particles according to the present invention can be used in a variety of applications according to the component contained inside the hollow particles.

The hollow particles according to the present invention are also suitably used as a rust inhibitor. Since the hollow particles according to the present invention are also useful as an additive for reducing electrical conductivity, for example, a coating material containing the hollow particles according to the present invention can be used as an anti-rust coating material for enhancing anticorrosive properties or rustproofness of a steel material or the like (such as an undercoat for coating or a lubricant coating material). Alternatively, an anti-rust additive can also be encapsulated in the hollow particles added to the anti-rust coating material.

<Method of producing hollow particles>

The hollow particles according to the present invention can be produced, suitably, by a production method comprising (A) a mixed solution preparation step, (B) a suspension step, (C) a polymerization step, (D) a solvent removal step by solvent removal in liquid, and (E) a recovery step below.

Specifically, the hollow particles according to the present invention can be produced, suitably, by a production method comprising:

(A) a mixed solution preparation step of preparing a mixed solution containing polymerizable monomers containing a cross-linkable monomer, a hydrophobic organic solvent, a polymerization initiator, and an aqueous medium;
(B) a suspension step of suspending the mixed solution obtained in the mixed solution preparation step, thereby preparing a suspension in which droplets of the polymerizable monomer composition containing the polymerizable monomers, the hydrophobic organic solvent, and the polymerization initiator are dispersed in the aqueous medium;
(C) a polymerization step of subjecting the suspension obtained in the suspension step to a polymerization reaction, thereby preparing a precursor composition containing precursor particles having hollow portions and containing the hydrophobic organic solvent encapsulated in the hollow portions;
(D) a solvent removal step of removing the hydrophobic organic solvent encapsulated in the precursor particles by performing solvent removal in liquid on the precursor composition obtained in the polymerization step, thereby obtaining a hollow particle slurry containing hollow particles and an aqueous medium; and
(E) a recovery step of recovering the hollow particles from the hollow particle slurry obtained in the solvent removal step.

(A) Mixed solution preparation step

The mixed solution preparation step is a step of preparing a mixed solution containing polymerizable monomers containing a cross-linkable monomer, a hydrophobic organic solvent, a polymerization initiator, and an aqueous medium. The hollow particles according to the present invention are preferably produced by the production method comprising such a step.

[Polymerizable monomers]

The polymerizable monomers to be used are the above-mentioned cross-linkable monomer, and optionally the above-mentioned monofunctional monomer. The monomer composition of the polymerizable monomers can be any monomer composition as long as the monomer composition of the target shell polymer can be obtained.
The content of the polymerizable monomers (the total amount of the cross-linkable monomer and the monofunctional monomer) in the mixed solution prepared in the mixed solution preparation step is not particularly limited, and from the viewpoint of the balance between the particle size and the mechanical strength, the content is preferably 15 to 55 mass%, more preferably 25 to 50 mass% relative to 100 mass% of the total mass of the components in the mixed solution excluding the aqueous medium.

[Hydrophobic organic solvent]

As the hydrophobic organic solvent, a non-polymerizable and poorly water-soluble organic solvent is used. The hydrophobic organic solvent acts as a spacer material which forms hollow portions inside the particles.
The hydrophobic organic solvent is not particularly limited, and hydrocarbon solvents can be suitably used. Specific examples thereof include solvents having relatively high volatility, such as saturated hydrocarbon solvents such as butane, pentane, normal hexane, cyclohexane, heptane, and octane; aromatic hydrocarbon solvents such as benzene, toluene, and xylene; and carbon disulfide, carbon tetrachloride, and the like.
For a preferred hydrophobic organic solvent, the proportion of the saturated hydrocarbon solvent in 100 mass% of the total amount of the hydrophobic organic solvent is 50 mass% or more. This causes sufficient phase separation inside droplets of the polymerizable monomer composition prepared in the suspension step described later, and thus hollow particles each having only one hollow portion can be readily obtained, and generation of porous particles can be suppressed. To further suppress generation of porous particles and readily obtain uniform hollow portions of the hollow particles, the proportion of the saturated hydrocarbon solvent is preferably 60 mass% or more, more preferably 80 mass% or more in 100 mass% of the total amount of the hydrophobic organic solvent.
Preferred hydrophobic organic solvents are $C_5$ to $C_8$ hydrocarbon solvents. The $C_5$ to $C_8$ hydrocarbon solvents are easily encapsulated in precursor particles during the polymerization step described later, and can be easily removed from the precursor particles during the solvent removal step described later. Among these, $C_6$ to $C_8$ hydrocarbon solvents are particularly preferred.
From the viewpoint of ease in removal in the solvent removal step described later, the hydrophobic organic solvents are those having a boiling point of preferably 130°C or less, more preferably 115°C or less. On the other hand, from the viewpoint of ease in encapsulation in the precursor particles, the hydrophobic organic solvents are those having a boiling point of preferably 30°C or more, more preferably 50°C or more.
In the present invention, when the hydrophobic organic solvent is a mixed solvent containing a plurality of hydrophobic organic solvents and a plurality of boiling points is present, the boiling point of the hydrophobic organic solvent is defined as the boiling point of the solvent having the highest boiling point among the solvents contained in the mixed solvent, i.e., the highest boiling point of the plurality of boiling points.
Preferably, the hydrophobic organic solvent has a relative permittivity at 20°C of 3 or less. The relative permittivity is one of indices indicating the level of the polarity of a compound. When the hydrophobic organic solvent has a sufficiently low relative permittivity of 3 or less, it is considered that phase separation quickly progresses in droplets of the polymerizable monomer composition to be prepared in the suspension step described later, and hollow portions are readily formed.
Examples of the hydrophobic organic solvent having a relative permittivity at 20°C of 3 or less include heptane (1.9), cyclohexane (2.0), benzene (2.3), toluene (2.4), and the like (the numerals in the brackets are values of the relative permittivity). For the relative permittivity at 20°C, the values according to known documents (e.g., "Kagaku Binran Kisohen", edited by Chemical Society of Japan, the 4th revised edition, Maruzen Company, Limited, published on September 30, Heisei 5, pages II-498 to II-503) and other technical information can be referred to. Examples of the method of measuring the relative permittivity at 20°C include a relative permittivity test in accordance with 23 of JIS C 2101:1999 which is performed at a measurement temperature of 20°C.
The content of the hydrophobic organic solvent in the mixed solution is preferably 50 to 500 parts by mass, more preferably 60 to 400 parts by mass, still more preferably 80 to 350 parts by mass, particularly preferably 100 to 300 parts by mass relative to 100 parts by mass of the total mass of the polymerizable monomers.

When the hollow particles according to the present invention each comprise a shell formed of the above-mentioned shell polymer and have a true density of 1.18 g/cm$^3$ or less, and C calculated from Expression (1) has a value of 1.16 or less, the hydrophobic organic solvent can be sufficiently removed by the solvent removal in liquid described later even if a relatively large amount of the hydrophobic organic solvent is used. As a result, the hollow particles according to the present invention can have a high void ratio and excellent electrical insulation.

[Polymerization initiator]

As the polymerization initiator, use of an oil-soluble polymerization initiator is preferred. By using the oil-soluble polymerization initiator as the polymerization initiator, the polymerization initiator can be suitably taken into droplets of the polymerizable monomer composition in a suspension to be prepared in the suspension step described later.

The oil-soluble polymerization initiator is not particularly limited as long as it has a solubility in water of 0.2 mass% or less and is lipophilic. Examples of the oil-soluble polymerization initiator include benzoyl peroxide, lauroyl peroxide, t-butylperoxide 2-ethylhexanoate, t-butylperoxydiethyl acetate, t-butyl peroxypivalate, 2,2'-azobis(2,4-dimethylvaleronitrile), azobisisobutyronitrile, and the like.

The content of the polymerization initiator is preferably 0.5 to 20 parts by mass, more preferably 1 to 15 parts by mass, still more preferably 2 to 12 parts by mass relative to 100 parts by mass of the total mass of the polymerizable monomers in the mixed solution. By controlling the content of the polymerization initiator within these ranges above, the polymerization reaction is caused to sufficiently progress, it is less likely that the polymerization initiator may remain after the end of the polymerization reaction, and it is less likely that unexpected side reactions may progress.

[Aqueous medium]

Examples of aqueous media include media selected from the group consisting of water, hydrophilic solvents, and mixtures of water and hydrophilic solvents.

The hydrophilic solvent is not particularly limited as long as it is sufficiently mixed with water and does not cause phase separation, and examples thereof include alcohols such as methanol and ethanol; tetrahydrofuran (THF); dimethyl sulfoxide (DMSO); and the like.

Among these aqueous media, use of water is preferred due to the level of the polarity. When a mixture of water and a hydrophilic solvent is used, to appropriately form droplets of the polymerizable monomer composition containing the polymerizable monomer, the hydrophobic organic solvent, and the polymerization initiator, preferably, the entire mixture does not have an excessively reduced polarity. When a mixture of water and a hydrophilic solvent is used, the mixing ratio (mass ratio) of water to the hydrophilic solvent is preferably 99:1 to 50:50.

In the mixed solution preparation step, a dispersion stabilizer is preferably used in addition of the polymerizable monomers, the hydrophobic organic solvent, the polymerization initiator, and the aqueous medium. In other words, the mixed solution preparation step is preferably a step of preparing a mixed solution containing the polymerizable monomers, the hydrophobic organic solvent, the polymerization initiator, the aqueous medium, and the dispersion stabilizer.

The dispersion stabilizer is a compound which causes droplets of the polymerizable monomer composition to be dispersed in the aqueous medium in the suspension step described later, and may be either of an inorganic dispersion stabilizer or an organic dispersion stabilizer.

Examples of inorganic dispersion stabilizers include colloidal silica, magnesium hydroxide, calcium phosphate, calcium carbonate, barium sulfate, calcium oxalate, calcium carbonate, magnesium carbonate, barium carbonate, tricalcium phosphate, aluminum hydroxide, magnesium hydroxide, ferric hydroxide, hydroxy apatite, silicic acid diatomite, clay, bentonite, and the like.

Examples of organic dispersion stabilizers include methylcellulose, hydroxypropylmethylcellulose, carboxymethylcellulose, starch, and the like.

Among these, inorganic dispersion stabilizers are preferred from the viewpoint of a high effect of stabilizing dispersion and ease in control of the particle diameter of droplets of the polymerizable monomer composition containing the polymerizable monomers, the hydrophobic organic solvent, and the polymerization initiator. Among these inorganic dispersion stabilizers, metal-containing dispersion stabilizers are preferred, and poorly water-soluble inorganic metal salts are more preferred. The poorly water-soluble inorganic metal salts are preferably inorganic metal salts having a solubility in 100 g of water of 0.5 g or less, and examples thereof include magnesium hydroxide, calcium hydroxide, barium hydroxide, calcium phosphate, and the like. Among these, magnesium hydroxide is more preferred. These dispersion stabilizers can be used alone or in combination.

To further enhance the effect of stabilizing dispersion, the dispersion stabilizer is preferably used in the form of a dispersion or a solution of the dispersion stabilizer by dispersing or dissolving the dispersion stabilizer in an aqueous medium. In other words, in the mixed solution preparation step, the mixed solution is preferably obtained by mixing the polymerizable monomers, the hydrophobic organic solvent, and the polymerization initiator with the dispersion stabilizer in the form of a dispersion or a solution. The aqueous medium to be used can be those listed above.

For the mixing ratio of the dispersion stabilizer in the form of a dispersion or a solution thereof to the aqueous medium, the mass ratio of "dispersion stabilizer:aqueous medium" is preferably 0.7:100 to 7:100, more preferably 1.0:100 to 4.0:100, still more preferably 1.4:100 to 3:100. When the mixing ratio of the dispersion stabilizer to the aqueous medium falls within these ranges above, the effect of stabilizing dispersion can be more appropriately enhanced.

As the method of preparing a dispersion or a solution of the dispersion stabilizer, a method of directly mixing the dispersion stabilizer with the aqueous medium may be used. Preferred is a method of reacting two or more compounds as precursors of the dispersion stabilizer (i.e., two or more precursor compounds) by mixing these in an aqueous medium, thereby generating the dispersion stabilizer.

When the two or more precursor compounds are mixed with the aqueous medium, any precursor compound can be used without limitation. For example, when a poorly water-soluble hydroxide salt such as magnesium hydroxide, calcium hydroxide, or barium hydroxide is used as the dispersion stabilizer, examples of the two or more precursor compounds include a combination of a water-soluble polyvalent metal salt and an alkali metal hydroxide, and the like.

Examples of the water-soluble polyvalent metal salt include hydrochloric acid salts, sulfuric acid salts, nitric acid salts, and acetic acid salts of polyvalent metals such as magnesium, calcium, aluminum, iron, copper, manganese, nickel, and tin, and the like. Among these, water-soluble salts of magnesium and calcium are preferred. Examples of alkali metal hydroxides include sodium hydroxide, potassium hydroxide, lithium hydroxide, and the like. For example, when magnesium hydroxide is used as the dispersion stabilizer, two or more precursor compounds are suitably a combination of magnesium chloride and sodium hydroxide.

The two or more precursor compounds can be mixed in the aqueous medium by any method. When the two or more precursor compounds are a combination of a water-soluble polyvalent metal salt and an alkali metal hydroxide, a method of adding an aqueous medium solution of the alkali metal hydroxide dropwise to an aqueous medium solution of the water-soluble polyvalent metal salt is suitable.

In the aqueous medium solution of the water-soluble polyvalent metal salt, the content of the water-soluble polyvalent metal salt is preferably 2 to 8 parts by weight, more preferably 3 to 6 parts by weight relative to 100 parts by weight of the aqueous medium solution. In the aqueous medium solution of the alkali metal hydroxide, the content of the alkali metal hydroxide is preferably 6 to 20 parts by weight, more preferably 8 to 18 parts by weight relative to 100 parts by weight of the aqueous medium solution. The aqueous medium to be used can be those listed above.

In the mixed solution preparation step, the mixed solution can be obtained by mixing the above-mentioned components by stirring or the like. At this time, other materials may be optionally added in addition to the above-mentioned components. In the mixed solution preparation step, a mixed solution is prepared, in which an oil phase containing lipophilic materials such as the polymerizable monomers, the hydrophobic organic solvent, and the polymerization initiator is dispersed into a particle size of about several millimeters in an aqueous phase containing the aqueous medium and the dispersion stabilizer optionally used. The dispersion state of these components in the mixed solution can also be observed by the naked eye depending on the types of the components.

In the mixed solution preparation step, to readily obtain a homogenous composition of the shell portion, the mixed solution is preferably prepared by preliminarily preparing an oil phase containing the polymerizable monomers, the hydrophobic organic solvent, and the polymerization initiator, and mixing the oil phase with a dispersion or solution prepared by dispersing or dissolving the dispersion stabilizer in the aqueous medium.

(B) Suspension step

The suspension step is a step of suspending the mixed solution obtained in the mixed solution preparation step described above, thereby preparing a suspension in which droplets of the polymerizable monomer composition containing the polymerizable monomers, the hydrophobic organic solvent, and the polymerization initiator are dispersed in the aqueous medium.

The suspension method for forming droplets of the polymerizable monomer composition is not particularly limited. Preferred is a method of stirring the mixed solution obtained in the mixed solution preparation step with a stirrer enabling strong stirring. The stirrer used in the suspension step is not particularly limited, and for example, a stirring apparatus including a stirrer having a stirring blade or a rotor and a feeding tank for feeding to the stirrer can be used. The stirrer may be any stirrer having a stirring blade or a rotor, and is not particularly limited. To efficiently form a suspension, suitable is a stirrer having a combination of a rotor as a concentric ring with comb teeth and a stator, in which the rotor is rotated at a high speed to flow the dispersion from the inside of the rotor to the outside of the stator, and the dispersion is stirred in gaps between the rotor and the stator.

Examples of the stirrer having such a configuration include in-line type emulsion dispersing machines, and examples of in-line type emulsion dispersing machines include a product name "CAVITRON" (available from Eurotec, Ltd.), a product name "MILDER" (available from Pacific Machinery & Engineering Co., Ltd.), a product name "EBARA MILDER" (available from EBARA CORPORATION), a product name "TK Pipeline Homomixer" (available from Tokushu Kika Kogyo Co., Ltd.), a product name "Colloid Mill" (available from Shinko Pantec Co., Ltd.), a product name "SLASHER" (available from NIPPON COKE & ENGINEERING CO., LTD.), a product name "Trigonal wet grinder" (available from Mitsui Miike Kakoki K.K.), a product name "Fine Flow Mill" (available from Pacific Machinery & Engineering Co., Ltd.), and the like.

In the suspension step, a suspension in which droplets of the polymerizable monomer composition containing the lipophilic materials above are homogeneously dispersed in the aqueous medium can be obtained. Such droplets of the polymerizable monomer composition are difficult to observe with the naked eye, and can be observed with a known observation apparatus such as an optical microscope, for example. In the suspension step, phase separation occurs in the droplets of the polymerizable monomer composition, and thus a hydrophobic organic solvent having a low polarity is likely to concentrate on the insides of the droplets. As a result, in the obtained droplets, the hydrophobic organic solvent is distributed in the inside of each droplet and other materials other than the hydrophobic organic solvent are distributed in the periphery thereof.

(C) Polymerization step

The polymerization step is a step of subjecting the suspension prepared in the suspension step described above to a polymerization reaction, thereby preparing a precursor composition containing precursor particles having hollow portions, containing the hydrophobic organic solvent encapsulated in the hollow portions, and having a true density smaller than that of water.

In the polymerization step, the polymerizable monomers in the droplets are polymerized in the state where the hydrophobic organic solvent is encapsulated in the droplets of the polymerizable monomer composition. Thereby, precursor particles each having a shell containing a resin as the polymerized product of the polymerizable monomer and a hollow portion filled with the hydrophobic organic solvent are formed.

In the polymerization step, the droplets of the polymerizable monomer composition are subjected to a polymerization reaction in the state where the hydrophobic organic solvent is encapsulated in the droplets. Thereby, the polymerization reaction is likely to progress while the shape of the droplets is maintained, and the size and void ratio of the precursor particles are readily controlled. Since the polymerizable monomers are used in combination with the hydrophobic organic solvent, the hydrophobic organic solvent has a low polarity to the shell of the precursor particles, and thus is less compatible with the shell. Thus, it is likely that phase separation sufficiently occurs and only one hollow portion is formed in the shell.

The polymerization method is not particularly limited, and for example, a batch-wise (batch) method, a semi-continuous method, a continuous method, or the like can be used. The polymerization temperature is preferably 40 to 90°C, more preferably 50 to 80°C. The reaction time for polymerization is preferably 1 to 48 hours, more preferably 3 to 24 hours.

Through the polymerization step, a precursor composition is obtained, in which the precursor particles encapsulating the hydrophobic solvent are dispersed in the aqueous phase containing the aqueous medium as the main component.

(D) Solvent removal step by solvent removal in liquid

The solvent removal step by solvent removal in liquid is a step of removing the hydrophobic organic solvent encapsulated in the precursor particles in the precursor composition obtained in the polymerization step by solvent removal in liquid, thereby obtain a hollow particle slurry containing hollow particles and the aqueous medium.

In the solvent removal step by solvent removal in liquid, the hydrophobic organic solvent encapsulated in the precursor particles in the precursor composition are removed by bubbling a gas into the precursor composition. According to this method, the hydrophobic organic solvent encapsulated in the precursor particles is replaced by the gas to generate hollow particles encapsulating the gas. As a result, a hollow particle slurry containing an aqueous phase containing the aqueous medium as the main component and hollow particles is obtained.

As another method of removing the hydrophobic organic solvent encapsulated in the precursor particles besides the solvent removal in liquid, a heating and drying method is also considered, the method comprising separating and recovering solid contents containing the precursor particles from the precursor composition as needed, and then heating and drying the precursor particles to remove the hydrophobic organic solvent encapsulated in the precursor particles. On the other hand, when the hydrophobic organic solvent encapsulated in the precursor particles is removed by the heating and drying method, heating and drying at a high temperature is needed, and thus a large amount of energy is needed. In addition, a facility enabling heating at a high temperature is also needed, leading to an increase in drying cost and facility cost. In contrast, heating and drying at a high temperature is not needed in the solvent removal in liquid, which has advantages in energy and cost.

When the hollow particles according to the present invention each comprise the shell formed of the above-mentioned shell polymer and have a true density of 1.18 g/cm$^3$ or less, and C calculated from Expression (1) has a value of 1.16 or less, the hydrophobic organic solvent encapsulated in the precursor particles can be sufficiently removed even if the hollow particles are obtained through the solvent removal in liquid. Furthermore, the hollow particles according to the present invention can have a high void ratio and excellent electrical insulation even if the hollow particles are obtained through the solvent removal in liquid.

The gas used in the solvent removal in liquid is not particularly limited, and is preferably an inert gas such as nitrogen and argon.

The bubbling condition is appropriately adjusted according to the type and amount of the hydrophobic organic solvent to remove the hydrophobic organic solvent encapsulated in the precursor particles, and is not particularly limited. The bubbling time is preferably 1 to 48 hours, more preferably 3 to 24 hours. The bubbling rate of the gas per minute is a volume preferably 0.1 to 10 times, more preferably 0.5 to 2 times the volume of the precursor composition fed to the removal of the solvent in the solution.

The temperature during bubbling is not particularly limited, and is preferably a temperature equal to or higher than the polymerization temperature in the polymerization step. The temperature during bubbling may be 50°C or more and 100°C or less, or may be 80°C or more and 95°C or less, for example.

The temperature during bubbling may be a temperature equal to or higher than the temperature obtained by subtracting 35°C from the boiling point of the hydrophobic organic solvent. By bubbling the gas at such a temperature, the amount of residual hydrophobic organic solvent in the hollow particles can be reduced. Here, when the hydrophobic organic solvent is a mixed solvent containing a plurality of hydrophobic organic solvents and a plurality of boiling points is present, the boiling point of the hydrophobic organic solvent in the solvent removal step is defined as the boiling point of the solvent having the highest boiling point among the solvents contained in the mixed solvent, i.e., the highest boiling point of the plurality of boiling points. To reduce the amount of residual hydrophobic organic solvent in the hollow particles, the temperature during bubbling is a temperature equal to or higher than the temperature obtained by subtracting preferably 30°C, more preferably 20°C from the boiling point of the hydrophobic organic solvent.

(E) Recovery step

The recovery step is a step of recovering hollow particles from the hollow particle slurry obtained in the solvent removal step.

The method of recovering the hollow particles from the hollow particle slurry is not particularly limited, and a known method can be used. For example, a solid liquid separation method such as centrifugation, filtration, and static separation, a drying method, or a method in combination thereof can be appropriately used. By the solid liquid separation method or the drying method, the aqueous medium can be removed from the hollow particle slurry, and the hollow particles separated from the aqueous medium can be recovered.

The aqueous medium can be removed from the hollow particle slurry by the solid liquid separation method, and solid contents containing the hollow particles can be recovered. The solid liquid separation method is not particularly limited, and a known method can be used. For example, as the solid liquid separation method, centrifugation or filtration is preferably used. The condition for solid liquid separation can be any condition as long as the aqueous medium can be removed from the hollow particle slurry, and is not particularly limited. Preferably, the aqueous medium is further removed by performing the drying method on the solid contents containing the hollow particles obtained by the solid liquid separation method.

By a drying method, the aqueous medium can be removed from the hollow particle slurry or the solid contents obtained after the solid liquid separation step, and the solid contents containing the hollow particles can be recovered. The drying method can be any method which can remove the aqueous medium, and is not particularly limited. Examples of the drying method include depressurized drying, drying with heating, pneumatic conveying drying, and combined methods of these.

The drying condition when drying with heating is used can be any condition as long as the aqueous medium can be removed, and is not particularly limited. According to the above production method, a relatively mild drying condition can be used as the drying condition when drying with heating is used in the recovery step. The drying temperature is not particularly limited, and is preferably 20 to 100°C, more preferably 25 to 80°C, still more preferably 30 to 60°C. The drying time is not particularly limited, and is preferably 1 to 48 hours, more preferably 3 to 24 hours. The drying atmosphere is also not particularly limited, and can be appropriately selected according to the application of the hollow particles. Examples of the drying atmosphere include air, oxygen, nitrogen, argon, and the like.

(F) Other steps

The production method may comprise other steps. Examples of the other steps include (F-1) a washing step and/or (F-2) another hollow portion replacement step.

(F-1) Washing step

The production method preferably comprises a washing step before or after the recovery step. For example, when the dispersion stabilizer is used, preferably, the production method comprises a washing step before the recovery step, the washing step being a step of performing washing by adding an acid or an alkali to remove the residual dispersion stabilizer in the hollow particle slurry containing the hollow particles and the aqueous medium. When the dispersion stabilizer used is a dispersion stabilizer soluble to an acid, preferably, the acid is added to the precursor composition containing the precursor particles, and washing is performed. In contrast, when the dispersion stabilizer used is a dispersion stabilizer soluble to an alkali, preferably, the alkali is added to the precursor composition containing the precursor particles, and washing is performed.
When the dispersion stabilizer soluble to an acid is used as the dispersion stabilizer, it is preferred that the acid be added to the precursor composition containing the precursor particles, and the pH be adjusted to preferably 6.5 or less, more preferably 6 or less. As the acid to be added, an inorganic acid such as sulfuric acid, hydrochloric acid, or nitric acid or an organic acid such as formic acid or acetic acid can be used. In particular, sulfuric acid is suitable because of its large efficiency in removal of the dispersion stabilizer and a small load over the production facility.

(F-2) Another hollow portion replacement step

The another hollow portion replacement step is a step of replacing a gas or a liquid inside the hollow particles by another gas or liquid. By such a replacement, the environment inside the hollow particles can be changed, a molecule can be selectively sealed inside the hollow particles, or the chemical structure inside the hollow particles can be modified according to the application.

<Resin composition>

The hollow particles according to the present invention can be mixed with a resin, thereby preparing a resin composition.
The resin composition may be a liquid resin composition, or may be a resin molded article. Examples of liquid resin compositions include those containing a liquid matrix resin before a curing reaction, those containing the components dissolved or dispersed in a solvent, and resin compositions which each contain a thermoplastic resin as a matrix resin and are in a liquid state as a result of melting of the resin. Examples of resin molded articles include molded articles formed of the above-mentioned liquid resin compositions by known methods.
The matrix resin contained in the resin composition is not particularly limited, and can be a thermosetting resin or a thermoplastic resin, for example. The resin contained in the resin composition may be an unreacted monomer, may be a prepolymer or a macromonomer, may be a polymer, or a precursor of a curable resin, such as a polyamic acid. The matrix resin contained in the resin composition can contain a thermoplastic elastomer as the resin. Further, the resin composition may contain rubber.
The thermosetting resin to be used can be known thermosetting resins, and is not particularly limited. Examples thereof include phenol resins, melamine resins, urea resins, unsaturated polyester resins, epoxy resins, polyurethane resins, silicon resins, alkyd resins, thermally curable modified polyphenylene ether resins, thermally curable polyimide resins, benzoxazine resins, urea resins, allyl resins, aniline resins, maleimide resins, bismaleimide triazine resins, liquid crystalline polyester resins, vinyl ester resins, unsaturated polyester resins, cyanate ester resins, polyether imide resins, and the like. These thermosetting resins can be used alone or in combination.
The thermoplastic resin to be used can be known thermoplastic resins, and is not particularly limited. Examples thereof include polyolefins such as polypropylene and polyethylene; polyamides such as PA6, PA66, and PA12; polyimide, polyamidimide, polyether imide, polyether ketone ketone, polyvinyl chloride, polystyrene, poly(meth)acrylate, polycarbonate, polyvinylidene fluoride, acrylonitrile-butadiene-styrene copolymers (ABSs), acrylonitrile-styrene copolymers (ASs), polyphenylene ether, polyphenylene sulfide, polyester, polytetrafluoroethylene, thermoplastic elastomers, and the like. These thermoplastic resins can be used alone or in combination.
Among these resins, insulative resins such as epoxy resins, thermally curable modified polyphenylene ether resins, thermally curable polyimide resins, silicon resins, benzoxazine resins, melamine resins, urea resins, allyl resins, phenol resins, unsaturated polyester resins, polyurethane resins, and aniline resins are preferably used in applications where a reduction in dielectric constant or a reduction in dielectric loss tangent is required. Among these, epoxy resins, thermally curable polyimide resins, modified polyphenylene ether resins, silicon resins, benzoxazine resins, and melamine resins are preferably used. These insulative resins can be used alone or in combination.

As the thermoplastic elastomer, thermoplastic elastic polymers traditionally used as molding resins can be used, and examples thereof include urethane elastomers, styrene elastomers, olefin elastomers, amide elastomers, ester elastomers, and the like. The thermoplastic elastomer generally indicates an elastomer which has rubber elasticity at normal temperature (25°C) and can be plasticized and molded at a high temperature. These thermoplastic elastomers may be used alone or in combination.

The rubber may be a rubber containing natural rubber (NR), isoprene rubber (IR), butadiene rubber (BR), styrene-butadiene copolymer rubber (SBR), acrylonitrile-butadiene copolymer rubber (NBR), ethylenepropylene-diene terpolymer (EPDM), or the like. These rubbers may be used alone or in combination.

The content of the resin in 100 mass% of the total solid contents in the resin composition is not particularly limited, and is preferably 50 to 95 mass% or less. When the content of the resin is equal to or higher than the lower limit, molding properties in production of resin molded articles are excellent, and resin molded articles having high mechanical strength are obtained. On the other hand, when the content of the resin is equal to or lower than the upper limit, the hollow particles according to the present invention can be sufficiently contained, and thus, the effect of reducing the dielectric loss tangent or the like can be sufficiently demonstrated by the hollow particles according to the present invention.

The resin composition may further contain an additive such as a curing agent for progressing a curing reaction, a curing catalyst, or an initiator according to the type of the resin. Examples of the curing agent include amines, acid anhydrides, imidazoles, thiols, phenols, naphthols, benzoxazines, cyanate esters, carbodiimides, and the like. The content of the curing agent is not particularly limited, and can be 5 to 120 parts by mass relative to 100 parts by mass of the resin, for example.

In 100 mass% of the total solid contents in the resin composition, the content of the hollow particles according to the present invention is not particularly limited, and is preferably 5 to 50 mass%. When the content of the hollow particles is equal to or higher than the lower limit, the effect of reducing the dielectric loss tangent or the like can be sufficiently demonstrated by the hollow particles according to the present invention. On the other hand, when the content of the hollow particles is equal to or lower than the upper limit, the resin can be sufficiently contained, and thus molding properties and mechanical strength can be improved.

The resin composition may further contain additives such as a compatibilizer, an ultraviolet absorbing agent, a colorant, a heat stabilizer, and a filler, and a solvent or the like as needed in the range not impairing the effects of the present disclosure. The resin composition may further contain organic or inorganic fibers such as carbon fibers, glass fibers, aramid fibers, or polyethylene fibers.

The resin composition can be prepared, for example, by mixing the hollow particles according to the present invention and the resin with the additives, the solvent, and the like optionally added. When the resin in the resin composition is a thermoplastic resin, the mixing may be performed by adding the hollow particles according to the present invention and the additives optionally added to a melted thermoplastic resin, and melt kneading these. The resin composition thus prepared may be a liquid resin composition, or may be a resin molded article obtained by forming the liquid resin composition into a molded article by a known method.

The resin molded article can be produced by any production method without limitation. For example, the resin molded article can be obtained by applying a liquid resin composition onto a support, the liquid resin composition being prepared by adding the hollow particles and the like to a liquid matrix resin before a curing reaction or by dissolving or dispersing the components in a solvent, and optionally curing the liquid resin composition.

Examples of a material for the support include resins such as polyethylene terephthalate and polyethylene naphthalate; metals such as copper, aluminum, nickel, chromium, gold, and silver; and the like. These supports may have a surface coated with a mold release agent.

As the method of applying the liquid resin composition, a known method can be used, and examples thereof include dip coating, roll coating, curtain coating, die coating, slit coating, gravure coating, and the like.

The resin molded article can also be obtained by impregnating the liquid resin composition with a base material, optionally drying the composition, and curing the composition. Examples of the base material include inorganic fibers such as carbon fibers, glass fibers, metal fibers, and ceramic fibers; organic synthetic fibers such as polyamide fibers, polyester fibers, polyolefin fibers, and Novoloid fibers; and the like. Among these, glass fibers (glass cloth) are preferred. The base material can be in any form, and a textile, a non-woven fabric, or the like can be used.

When the liquid resin composition contains a solvent, the resin composition is preferably dried after the application or impregnation. The drying temperature is preferably around a temperature at which the matrix resin is not cured, and is usually 20°C or more and 200°C or less, preferably 30°C or more and 150°C or less. The drying time is usually 30 seconds or more and 1 hour or less, preferably 1 minute or more and 30 minutes or less.

The curing reaction of the resin composition is performed by a method according to the type of the resin, and the method is not particularly limited. When a resin curable by heating is contained, the heating temperature for the curing reaction is appropriately adjusted according to the type of the resin, and is not particularly limited. The heating temperature is usually 30°C or more and 400°C or less, preferably 70°C or more and 300°C or less, more preferably 100°C or more and 200°C or less. The curing time is 5 minutes or more and 5 hours or less, preferably 30 minutes or more and 3 hours or less. The heating method is not particularly limited, and may be performed using an electric oven, for example.

The liquid resin before the curing reaction and the resin dissolved or dispersed in the solvent may be a thermosetting resin, or may be a thermoplastic resin.

Alternatively, the resin molded article may be obtained by molding a liquid resin composition which contains a melted thermoplastic resin as the resin into a desired shape by a known molding method such as extrusion molding, injection molding, press molding, or compression molding.

The resin molded article can have any shape, and the shape can be selected from a variety of shapes into which the resin composition can be molded. For example, the resin molded article can have any shape such as sheet-like shapes, film-like shapes, plate-like shapes, tubular shapes, and other various steric shapes. When the resin molded article contains fibers, the fibers contained in the resin molded article may be in the state of a non-woven fabric. When the resin molded article contains fibers, it may be a molded article of a resin composition prepared by adding the hollow particles according to the present disclosure to a fiber-reinforced plastic containing the above-mentioned resin and fibers.

Examples of applications of the resin composition according to the present disclosure include those in which the resin composition can be used, among the above-mentioned applications of the hollow particles according to the present invention.

EXAMPLES

Hereinafter, the present invention will be more specifically described by way of Examples and Comparative Examples, but the present invention is not limited to only these Examples. To be noted, parts and % are mass-based unless otherwise specified. A variety of measurements were performed by the methods described below.

<True density and void ratio of hollow particles>

(Measurement of apparent density of hollow particles)

Initially, about 30 $cm^3$ of hollow particles was added to a volumetric flask having a volume of 100 $cm^3$, and the mass of the added hollow particles was precisely measured. Next, isopropanol was added up to the exact gauge line of the volumetric flask into which the hollow particles were added, carefully to avoid inclusion of air bubbles. The mass of isopropanol added to the volumetric flask was precisely measured, and based on Expression (II) below, the apparent density $D_1$ (g/$cm^3$) of the hollow particles was calculated.

apparent density $D_1$ (g/$cm^3$) of hollow particles = [mass of hollow particles] ÷ (100 - [mass of isopropanol] ÷ [density of isopropanoil at measurement temperature)

(Measurement of true density of hollow particles)

After hollow particles were preliminarily ground, about 10 g of the ground pieces of the hollow particles was added to a volumetric flask having a volume of 100 $cm^3$, and the mass of the added ground pieces was precisely measured.

In the next step, isopropanol was added to the volumetric flask as in the measurement of the apparent density, and the mass of isopropanol was precisely measured. Then, based on Expression (I) below, the true density $D_0$ (g/$cm^3$) of hollow particles was calculated.

true density (g/$cm^3$) of hollow particles = [mass of ground pieces of hollow particles] ÷ (100 - [mass of isopropanol] ÷ [density of isopropanol at measurement temperature])

(Calculation of void ratio of hollow particles)

The void ratio (%) of hollow particles was calculated from the apparent density $D_1$ and the true density $D_0$ of the hollow particles using Expression (III) below:

void ratio (%) of hollow particles = 100 - [apparent density $D_1$ (g/cm$^3$) of hollow particles] ÷ [true density of hollow particles $D_1$ (g/cm$^3$) × 100

<Volume average particle size (Dv) and particle size distribution (Dv/Dn) of hollow particles>

Using a particle size distribution analyzer (available from Beckman Coulter, Inc., product name: Multisizer 4e), the volume average particle size (Dv) and the number average particle diameter (Dn) of the hollow particles were measured, and the particle size distribution (Dv/Dn) was calculated. The measurement conditions were as follows: the aperture diameter was 50 $\mu$m, the dispersive medium was ISOTON II (product name), the concentration was 10%, and 100,000 particles were measured. Specifically, 0.2 g of the hollow particles was taken into a beaker, and a surfactant aqueous solution (available from Fujifilm Corporation, product name: DRIWEL) as a dispersant was added thereto. Further, 2 ml of a dispersive medium was added thereto to swell the hollow particles. Thereafter, 10 ml of the dispersive medium was added, and dispersion was performed for 1 minute with an ultrasonic disperser, followed by measurement with the particle size distribution analyze.

<Relative permittivity and dielectric loss tangent of hollow particles>

Using a measurement apparatus (available from AET, type: ADMS01Nc), the relative permittivity and dielectric loss tangent of the hollow particles were measured at a frequency of 1 GHz and room temperature (25°C). It can be determined that a lower relative permittivity indicates more excellent insulation. It can be determined that a lower dielectric loss tangent indicates more excellent insulation.

[Example 1]

(1) Mixed solution preparation step

Initially, materials shown below were mixed to prepare an oil phase.

divinylbenzene (cross-linkable hydrocarbon monomer) 37.5 parts
ethylvinylbenzene (monofunctional hydrocarbon monomer) 1.6 parts
t-butylperoxydiethyl acetate (oil-soluble polymerization initiator) 0.89 parts
hydrophobic solvent: heptane 60.8 parts

Next, in a stirring tank, under stirring, an aqueous solution of 10.97 parts of sodium hydroxide (alkali metal hydroxide) dissolved in 55 parts of deionized water was gradually added to an aqueous solution of 15.67 parts of magnesium chloride (water-soluble polyvalent metal salt) dissolved in 225 parts of deionized water to prepare a magnesium hydroxide colloid (poorly water-soluble metal hydroxide colloid) dispersion as an aqueous phase. The resulting aqueous phase was mixed with the resulting oil phase, thereby preparing a mixed solution.

(2) Suspension step

In the next step, using the mixed solution obtained in the mixed solution preparation step, the mixed solution was suspended by a treatment with an in-line type emulsion dispersing machine, thereby preparing a suspension where monomer droplets encapsulating the hydrophobic solvent were dispersed in water.

(3) Polymerization step

The suspension obtained in the suspension step was heated from 40°C to 80°C in a nitrogen atmosphere, and was stirred under a temperature condition of 80°C for 24 hours to cause a polymerization reaction. By this polymerization reaction, a precursor composition was obtained, which was a slurry solution in which precursor particles encapsulating the hydrophobic solvent were dispersed in water.

(4) Solvent removal step

The hydrophobic solvent encapsulated in the precursor particles was removed by solvent removal in liquid, thus obtaining a hollow particle slurry containing the hollow particles and water. Specifically, nitrogen gas was bubbled under a temperature condition of 90°C for 12 hours from the bottom of the vessel into the precursor composition obtained in the polymerization step. Thereby, the hydrophobic solvent encapsulated in the precursor particles was replaced by nitrogen gas. At this time, the amount of bubbling nitrogen gas per minute was the same volume as that of the precursor composition obtained in the polymerization step.

(5) Washing step and solid liquid separation step

The hollow particle slurry obtained in the solvent removal step was washed with diluted sulfuric acid (25°C, 10 minutes), and the pH was adjusted to 5.5 or less. In the next step, after water was separated by filtration, 200 parts of deionized water was newly added to prepare a slurry again. Then, a treatment of washing with water (washing, filtration, and dehydration) was repeatedly performed at room temperature (25°C) several times, followed by separation through filtration to obtain solid contents.

(6) Water content removal step

The solid contents obtained in the solid liquid separation step were subjected to a heat treatment with a vacuum dryer under a vacuum condition at 40°C for 12 hours. Thereby, the water content on the surfaces of the hollow particles was removed, obtaining hollow particles in Example 1. The monomer composition of the shell polymer in the resulting hollow particles mostly corresponded to the composition of the polymerizable monomers fed to the polymerization. The resulting hollow particles were measured for true density, void ratio, volume average particle size (Dv), particle size distribution (Dv/Dn), relative permittivity, and dielectric loss tangent. The results are shown in Table 1.

[Example 2]

(1) Mixed solution preparation step

Initially, materials shown below were mixed to prepare an oil phase.

divinylbenzene (cross-linkable hydrocarbon monomer) 8.7 parts
ethylvinylbenzene (monofunctional hydrocarbon monomer) 0.4 parts
ethylene glycol dimethacrylate (heteroatom-containing cross-linkable monomer) 27.3 parts
pentaerythritol tetraacrylate (heteroatom-containing cross-linkable monomer) 9.1 parts
2,2'-azobis(2,4-dimethylvaleronitrile) (oil-soluble polymerization initiator) 1.04 parts
hydrophobic solvent: cyclohexane 54.5 parts

Next, in a stirring tank, under stirring, an aqueous solution of 5.49 parts of sodium hydroxide (alkali metal hydroxide) dissolved in 55 parts of deionized water was gradually added to an aqueous solution of 7.83 parts of magnesium chloride (water-soluble polyvalent metal salt) dissolved in 225 parts of deionized water, thereby preparing a magnesium hydroxide colloid (poorly water-soluble metal hydroxide colloid) dispersion as an aqueous phase. The resulting aqueous phase was mixed with the resulting oil phase, thereby preparing a mixed solution.

(2) Suspension step to (6) water content removal step

Hollow particles in Example 2 were obtained in the same manner as in Example 1 except that the mixed solution obtained in the mixed solution preparation step above was used and the polymerization temperature in the polymerization step was changed from 80°C to 65°C. The obtained hollow particles were measured as in Example 1. The monomer composition of the shell polymer in the resulting hollow particles mostly corresponded to the composition of the polymerizable monomers fed to the polymerization. The results are shown in Table 1.

[Example 3]

Hollow particles in Example 3 were obtained in the same manner as in Example 2 except that the amounts of the materials used in preparation of the oil phase were varied as shown in Table 1. The obtained hollow particles were measured as in Example 1. The monomer composition of the shell polymer in the resulting hollow particles mostly corresponded to the composition of the polymerizable monomers fed to the polymerization. The results are shown in Table 1.

[Example 4]

(1) Mixed solution preparation step

Initially, materials shown below were mixed to prepare an oil phase.

ethylene glycol dimethacrylate (heteroatom-containing cross-linkable monomer) 31.9 parts
pentaerythritol tetraacrylate (heteroatom-containing cross-linkable monomer) 9.1 parts
styrene (monofunctional hydrocarbon monomer) 4.6 parts
2,2'-azobis(2,4-dimethylvaleronitrile) (oil-soluble polymerization initiator) 1.04 parts
hydrophobic solvent: cyclohexane 54.5 parts

Next, a magnesium hydroxide colloid (poorly water-soluble metal hydroxide colloid) dispersion was prepared in the same manner as in Example 2, and the resulting aqueous phase was mixed with the resulting oil phase, thereby preparing a mixed solution.

(2) Suspension step to (6) water content removal step

In the next step, hollow particles in Example 4 were obtained in the same manner as in Example 2 except that the mixed solution obtained in the mixed solution preparation step above was used. The obtained hollow particles were measured as in Example 1. The monomer composition of the shell polymer in the resulting hollow particles mostly corresponded to the composition of the polymerizable monomers fed to the polymerization. The results are shown in Table 1.

[Example 5]

Hollow particles in Example 5 were obtained in the same manner as in Example 4 except that the amounts of the materials used in preparation of the oil phase were varied as shown in Table 1. The obtained hollow particles were measured as in Example 1. The monomer composition of the shell polymer in the resulting hollow particles mostly corresponded to the composition of the polymerizable monomers fed to the polymerization. The results are shown in Table 1.

[Example 6]

(1) Mixed solution preparation step

Initially, materials shown below were mixed to prepare an oil phase.

divinylbenzene (cross-linkable hydrocarbon monomer) 22.5 parts
ethylvinylbenzene (monofunctional hydrocarbon monomer) 0.9 parts
ethylene glycol dimethacrylate (heteroatom-containing cross-linkable monomer) 7.8 parts
pentaerythritol tetraacrylate (heteroatom-containing cross-linkable monomer) 7.8 parts
2,2'-azobis(2,4-dimethylvaleronitrile) (oil-soluble polymerization initiator) 1.04 parts
hydrophobic solvent: heptane 60.8 parts

Next, a magnesium hydroxide colloid (poorly water-soluble metal hydroxide colloid) dispersion was prepared in the same manner as in Example 2, and the resulting aqueous phase was mixed with the resulting oil phase, thereby preparing a mixed solution.

(2) Suspension step to (6) water content removal step

In the next step, hollow particles in Example 6 were obtained in the same manner as in Example 2 except that the mixed solution obtained in the mixed solution preparation step above was used. The obtained hollow particles were measured as in Example 1. The monomer composition of the shell polymer in the resulting hollow particles mostly corresponded to the composition of the polymerizable monomers fed to the polymerization. The results are shown in Table 1.

[Comparative Example 1]

(1) Mixed solution preparation step

Initially, materials shown below were mixed to prepare an oil phase.

ethylene glycol dimethacrylate (heteroatom-containing cross-linkable monomer) 31.9 parts
trimethylolpropane trimethacrylate (heteroatom-containing cross-linkable monomer) 13.7 parts
2,2'-azobis(2,4-dimethyvaleronitrile) (oil-soluble polymerization initiator) 1.04 parts
hydrophobic solvent: cyclohexane 54.5 parts

Next, in a stirring tank, under stirring, an aqueous solution of 16.46 parts of sodium hydroxide (alkali metal hydroxide) dissolved in 55 parts of deionized water was gradually added to an aqueous solution of 23.50 parts of magnesium chloride (water-soluble polyvalent metal salt) dissolved in 225 parts of deionized water, thereby preparing a magnesium hydroxide colloid (poorly water-soluble metal hydroxide colloid) dispersion as an aqueous phase. The resulting aqueous phase was mixed with the resulting oil phase, thereby preparing a mixed solution.

(2) Suspension step to (6) water content removal step

Hollow particles in Comparative Example 1 were obtained in the same manner as in Example 2 except that the mixed solution obtained in the mixed solution preparation step above was used. The obtained hollow particles were measured as in Example 1. The monomer composition of the shell polymer in the resulting hollow particles mostly corresponded to the composition of the polymerizable monomers fed to the polymerization. The results are shown in Table 1.

[Comparative Example 2]

Hollow particles in Comparative Example 2 were obtained in the same manner as in Example 2 except that the amounts of the materials used in preparation of the oil phase were varied as shown in Table 1. The obtained hollow particles were measured as in Example 1. The monomer composition of the shell polymer in the resulting hollow particles mostly corresponded to the composition of the polymerizable monomers fed to the polymerization. The results are shown in Table 1.

[Table 1]

Table 1

| | | | Example 1 | Example 2 | Example 3 | Example 4 | Example 5 | Example 6 | Comp. Ex. 1 | Comp. Ex. 2 |
|---|---|---|---|---|---|---|---|---|---|---|
| <Conditions for producing hollow particles> | | | | | | | | | | |
| Amounts of materials used in preparation of mixed solution | | | | | | | | | | |
| Oil phase | Divinylbenzene | | 37.5 | 8.7 | 3.9 | | | 22.5 | | 4.4 |
| | Ethylvinylbenzene | (parts) | 1.6 | 0.4 | 2.9 | | | 0.9 | | 0.2 |
| | Ethylene glycol dimethacrylate | (parts) | | 27.3 | 29.6 | 31.9 | 27.3 | 7.8 | 31.9 | 31.9 |
| | Trimethylolpropane trimethacrylate | (parts) | | | | | | | 13.7 | |
| | Pentaerythritol tetraacrylate | (parts) | | 9.1 | 9.1 | 9.1 | 9.1 | 7.8 | | 9.1 |
| | Styrene | (parts) | | | | 4.6 | 9.1 | | | |
| | Cyclohexane | (parts) | | 54.5 | 54.5 | 54.5 | 54.5 | | 54.5 | 54.5 |
| | Heptane | (parts) | 60.8 | | | | | 60.8 | | |
| | 2,2'-Azobis(2,4-dimethylvaleronitrile) | (parts) | | 1.04 | 1.04 | 1.04 | 1.04 | 1.04 | 1.04 | 1.04 |
| | t-Butylperoxydiethyl acetate | (parts) | 0.89 | | | | | | | |
| Aqueous phase | Water | (parts) | 280 | 280 | 280 | 280 | 280 | 280 | 280 | 280 |
| | Magnesium chloride | (parts) | 15.67 | 7.83 | 7.83 | 7.83 | 7.83 | 7.83 | 23.50 | 7.83 |
| | Sodium hydroxide | (parts) | 10.97 | 5.49 | 5.49 | 5.49 | 5.49 | 5.49 | 16.46 | 5.49 |
| Polymerization temperature | | (°C) | 80 | 65 | 65 | 65 | 65 | 65 | 65 | 65 |
| Polymerization time | | (hours) | 24 | 24 | 24 | 24 | 24 | 24 | 24 | 24 |
| Solvent removal step by solvent removal in liquid | | | Done | Done | Done | Done | Done | Done | Done | Done |
| <Hollow particles> | | | | | | | | | | |

(continued)

| | | Example 1 | Example 2 | Example 3 | Example 4 | Example 5 | Example 6 | Comp. Ex. 1 | Comp. Ex. 2 |
|---|---|---|---|---|---|---|---|---|---|
| Proportion of monofunctional monomer unit contained (value of B in Expression (1)) | (mass%) | 4 | 0.8 | 6.45 | 10 | 20 | 2.4 | 0 | 0.4 |
| Proportion of heteroatom-containing monomer unit contained | (mass%) | 0 | 80 | 85 | 90 | 80 | 40 | 100 | 90 |
| True density (value of A in Expression (1)) | $(g/cm^3)$ | 1.010 | 1.160 | 1.170 | 1.180 | 1.160 | 1.090 | 1.200 | 1.180 |
| Value of C calculated from Expression (1) | | 0.970 | 1.151 | 1.095 | 1.062 | 0.928 | 1.064 | 1.200 | 1.175 |
| Void ratio | (%) | 70 | 63 | 63 | 63 | 63 | 71 | 20 | 26 |
| Volume average particle size (Dv) | (pm) | 4.12 | 6.75 | 7.52 | 8.20 | 8.80 | 7.10 | 2.63 | 8.03 |
| Particle size distribution (Dv/Dn) | | 1.40 | 1.21 | 1.20 | 1.18 | 1.18 | 1.21 | 1.22 | 1.22 |
| Relative permittivity (1 GHz) | | 1.37 | 1.54 | 1.55 | 1.56 | 1.54 | 1.43 | 1.88 | 1.79 |
| Dielectric loss tangent (1 GHz) | | $6.12 \times 10^{-4}$ | $8.41 \times 10^{-3}$ | $8.90 \times 10^{-3}$ | $9.38 \times 10^{-3}$ | $8.40 \times 10^{-3}$ | $1.51 \times 10^{-3}$ | $9.53 \times 10^{-2}$ | $7.56 \times 10^{-2}$ |

A high void ratio and excellent electrical insulation were demonstrated in the hollow particles each comprising a shell containing a resin and a hollow portion surrounded by the shell wherein the resin was constituted by a shell polymer containing a cross-linkable monomer unit, the hollow particles had a true density of 1.18 g/cm$^3$ or less, and C calculated from Expression (1) had a value of 1.16 or less (Examples 1 to 6).

In contrast, when the hollow particles had an excessively large true density (Comparative Example 1) or when C of the hollow particles calculated from Expression (1) had an excessively large value (Comparative Examples 1 to 2), the hollow particles had a low void ratio and inferior electrical insulation.

**Claims**

1. Hollow particles each comprising a shell containing a resin and a hollow portion surrounded by the shell,

   wherein the resin is constituted by a shell polymer containing a cross-linkable monomer unit,
   the hollow particles have a true density of 1.18 g/cm$^3$ or less, and C of the hollow particles calculated from Expression (1) has a value of 1.16 or less:

   $$C = A \times (100 - B)/100 \qquad \text{Expression (1)}$$

   where A represents the value (unit: g/cm$^3$) of the true density of the hollow particles, and B represents the value (unit: mass%) of the proportion of a monofunctional monomer unit contained in the shell polymer.

2. The hollow particles according to claim 1, wherein the shell polymer contains 90 mass% or less of a heteroatom-containing monomer unit.

3. The hollow particles according to claim 1 or 2, wherein the hollow particles are obtained through solvent removal in liquid.

4. The hollow particles according to any one of claims 1 to 3, wherein the hollow particles have a void ratio of 60% or more.

5. The hollow particles according to any one of claims 1 to 4, wherein the shell polymer further contains the monofunctional monomer unit.

6. The hollow particles according to claim 5, wherein the shell polymer contains a monofunctional hydrocarbon monomer unit as the monofunctional monomer unit.

# EP 4 458 865 A1

<table>
<tr><td align="center">INTERNATIONAL SEARCH REPORT</td><td>International application No.<br><br>**PCT/JP2022/047959**</td></tr>
</table>

**A. CLASSIFICATION OF SUBJECT MATTER**

*C08F 2/18*(2006.01)i; *B01J 13/14*(2006.01)i
FI: C08F2/18; B01J13/14

According to International Patent Classification (IPC) or to both national classification and IPC

**B. FIELDS SEARCHED**

Minimum documentation searched (classification system followed by classification symbols)

C08F2/18; B01J13/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/26899 A1 (ZEON CORPORATION) 07 February 2019 (2019-02-07)<br>claims, paragraphs [0028]-[0029], [0061]-[0062], examples | 1-6 |
| X | WO 2019/150951 A1 (MATSUMOTO YUSHI-SEIYAKU CO., LTD.) 08 August 2019 (2019-08-08)<br>claims, paragraph [0031], examples | 1-2, 4-6 |
| X | WO 2018/025575 A1 (MATSUMOTO YUSHI-SEIYAKU CO., LTD.) 08 February 2018 (2018-02-08)<br>claims, paragraph [0024], examples | 1-2, 4-6 |
| X | WO 2004/074396 A1 (MATSUMOTO YUSHI-SEIYAKU CO., LTD.) 02 September 2004 (2004-09-02)<br>claims, p. 5, lines 7-24, examples | 1-2, 4-6 |
| A | WO 2021/112117 A1 (ZEON CORPORATION) 10 June 2021 (2021-06-10)<br>paragraph [0063] | 1-6 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

24

<table>
<tr><th colspan="2">INTERNATIONAL SEARCH REPORT<br>Information on patent family members</th><th colspan="2">International application No.<br><br>**PCT/JP2022/047959**</th></tr>
</table>

| Patent document cited in search report | Publication date (day/month/year) | Patent family member(s) | Publication date (day/month/year) |
|---|---|---|---|
| WO 2019/26899 A1 | 07 February 2019 | US 2021/0087349 A1<br>claims, paragraphs [0098]-[0099], [0190]-[0193], examples<br>CN 110997736 A | |
| WO 2019/150951 A1 | 08 August 2019 | US 2021/0363320 A1<br>claims, paragraph [0101], examples<br>CN 111684038 A<br>KR 10-2020-0115541 A | |
| WO 2018/025575 A1 | 08 February 2018 | US 2019/0194415 A1<br>claims, paragraph [0067], examples<br>EP 3495396 A1<br>CN 109476772 A<br>KR 10-2019-0035756 A | |
| WO 2004/074396 A1 | 02 September 2004 | US 2005/0080151 A1<br>claims, paragraph [0025], examples<br>EP 1598405 A1<br>KR 10-2005-0104297 A<br>CN 1697868 A | |
| WO 2021/112117 A1 | 10 June 2021 | US 2022/0355264 A1<br>paragraphs [0168]-[0183]<br>CN 114761440 A | |

Form PCT/ISA/210 (patent family annex) (January 2015)

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020045498 A

**Non-patent literature cited in the description**

- Kagaku Binran Kisohen. Maruzen Company, Limited, II-498-II-503